# EUROPÄISCHE PATENTSCHRIFT

(11) **EP 2 410 424 B1**
(45) Veröffentlichungstag und Bekanntmachung des Hinweises auf die Patenterteilung: **05.09.2018**
(21) Anmeldenummer: 11172368.0
(22) Anmeldetag: 01.07.2011
(51) Int. Cl.: G06F 9/445, H04L 12/24

(54) **Funkgerät mit Parameterprüf- und Korrektursystem und Verfahren zum Betrieb eines Funkgeräts**
Radio device with parameter checking and correcting system and method of operating same
Appareil radio doté d'un système de contrôle et de correction de paramètre et procédé de fonctionnement d'un appareil radio

(30) Priorität: 20.07.2010 DE 102010031687; 12.11.2010 DE 102010051211
(43) Veröffentlichungstag der Anmeldung: 25.01.2012
(73) Patentinhaber: Rohde & Schwarz GmbH & Co. KG, 81671 München (DE)
(72) Erfinder: Hoferer, Dietmar, 82194 Gröbenzell (DE); Strenz, Michael, 81829 München (DE)
(74) Vertreter: Körfer, Thomas

(56) Entgegenhaltungen:
- EP-A1- 1 283 994
- DE-A1- 19 818 515
- US-A- 5 875 327
- US-A1- 2007 027 972
- MITOLA J: "TECHNICAL CHALLENGES IN THE GLOBALIZATION OF SOFTWARE RADIO", IEEE COMMUNICATIONS MAGAZINE, IEEE SERVICE CENTER, PISCATAWAY, US, Bd. 37, Nr. 2, 1. Februar 1999 (1999-02-01), Seiten 84-89, XP000804508, ISSN: 0163-6804, DOI: 10.1109/35.747254

## Beschreibung

Die Erfindung betrifft ein softwarebasiertes Funkgerät und ein Verfahren zum Betrieb eines softwarebasierten Funkgeräts mit Parameterüberwachung.

Die Steuerung eines softwarebasierten Funkgeräts (software defined radio) erfolgt typischerweise durch Setzen von Parametern. Häufig sind diese Parameter nicht unabhängig voneinander, d.h. diverse Parameterkombinationen sind technisch nicht sinnvoll oder können von der vorliegenden Hardware nicht umgesetzt werden.

Herkömmlich werden sämtliche Abhängigkeiten von Parametern von Hand fest in die Steuersoftware des Funkgeräts codiert. Auch Aktualisierungsvorgänge müssen so fest programmiert sein. Dies erfordert einen hohen Programmieraufwand und ist bei steigender Komplexität der Funkgeräte nicht immer zuverlässig erreichbar, da sämtliche mögliche Funktionszustände vorhergesehen werden müssen. Das Dokument EP1283994A1 zeigt ein Funkgerät mit einem software Rekonfigurationsmanager. Eine "reconfiguration map" speichert sämtliche Abhängigkeiten der Parameter des Funkgeräts. Der Rekonfigurationsmanager arbeitet mit einer "höheren Instanz" zusammen um eine Rekonfiguration durchzuführen, wobei die "reconfiguration map" statisch bleibt.

Dokument US2007/027972 A1 offenbart ein Verfahren zur Konfiguration des Betriebmodus eines Computers. Dabei werden in einem Prioritätsgraphen ""policy guidelines" Parameter verwaltet. Dabei werden Affinitätsgruppen gebildet zwischen denen Konfigurationsinformationen ausgetauscht werden. Aus der Software-Entwicklung ist darüber hinaus ein Verfahren zur automatischen Generierung von Quellcode bekannt. So wird ausgehend von einer genauen Funktionsbeschreibung in einer entsprechenden Beschreibungssprache, z.B. XML, automatisch der Maschinencode erzeugt. So zeigt die europäische Patentschrift EP 1 121 637 B1 ein solches Quellcode-Generierungsverfahren. Nachteilhaft hieran ist jedoch, dass evtl. Abhängigkeiten zwischen Parametern nicht zuverlässig behandelt werden. Insbesondere kann es zu undefinierten Zwischenzuständen während der Parameteraktualisierung kommen.

Der Erfindung liegt die Aufgabe zugrunde, ein softwarebasiertes Funkgerät und ein Verfahren zum Betrieb eines softwarebasierten Funkgeräts zu schaffen, welche bei einem geringen Herstellungs- und Programmieraufwand eine effiziente und zuverlässige Funktion des Funkgeräts gewährleisten.

Die Aufgabe wird erfindungsgemäß für die Vorrichtung durch die Merkmale des unabhängigen Anspruchs 1 und für das Verfahren durch die Merkmale des unabhängigen Anspruchs 9 gelöst. Vorteilhafte Weiterbildungen sind Gegenstand der hierauf rückbezogenen Unteransprüche.

Ein erfindungsgemäßes Funkgerät verfügt über eine Verarbeitungseinrichtung und eine Parameterprüfeinrichtung. Die Verarbeitungseinrichtung steuert die Funktion des Funkgeräts mittels Parametern. Die Parameterprüfeinrichtung überwacht Abhängigkeiten der Parameter. Die Parameterprüfeinrichtung ordnet die Parameter in einer Hierarchie. Die Parameterprüfeinrichtung aktualisiert die Parameter in einer Reihenfolge nach ihrer Hierarchie.

In einem softwarebasierten Funkgerät muss stets dafür gesorgt sein, dass zu keinem Zeitpunkt eine ungültige Parameterkonfiguration auftritt. Dies ist Aufgabe einer Parameterprüfeinrichtung, welche Teil des erfindungsgemäßen Funkgeräts ist. Die Parameterprüfeinrichtung verwaltet sämtliche Parameter des Funkgeräts oder zumindest einer Applikation. Dies können vom Benutzer einstellbare Parameter sein, oder aber auch Indikator-Parameter, welche vom Funkgerät intern gesetzt werden und lediglich als Information zur Verfügung stehen. Die Parameterprüfeinrichtung verfügt über Wissen, ob und wie ein Parameter von einem anderen abhängt und sorgt bei Bedarf dafür, dass ein abhängiger Parameter nach bestimmten Regeln automatisch angepasst wird. Jeder Parameter kann eine Aktiv-Regel und/oder eine Wertbereich-Regel besitzen. In diesen Regeln können alle Parameter, zu welchen Abhängigkeiten existieren, mit einfließen.

Eine Aktiv-Regel beschreibt, wann der Wert eines Parameters gültig ist bzw. eine Bedeutung hat, oder wann er im aktuellen Kontext bedeutungslos ist. Eine Wertebereich-Regel gibt an, wie der Parameter seinen aktuell gültigen Wertebereich in Abhängigkeit von dem geänderten Parameter anzupassen hat. Ändert sich der Wertebereich des anzupassenden Parameters so, dass dessen aktueller Wert nicht innerhalb des nun gültigen Wertebereichs liegen würde, so wird dessen Wert auf einen gültigen Default-Wert gesetzt.

Damit sämtliche Parameter, welche von anderen Parametern abhängen, jederzeit korrekt berechnet werden können, werden diesen bestimmte Hierarchieebenen zugeordnet. Parameter, die von keinem anderen Parameter abhängen, befinden sich auf der niedrigsten Hierarchieebene n. Ein Parameter, der von einem anderen Parameter mit Hierarchieebene n abhängig ist, befindet sich selbst auf Hierarchieebene n+1. Hängt ein Parameter von mehreren anderen Parametern mit unterschiedlichen Hierarchieebenen ab, so ist seine Hierarchieebene um eine Hierarchieebene höher als die Hierarchieebene des Parameters mit der höchsten Hierarchieebene von dem er abhängt.

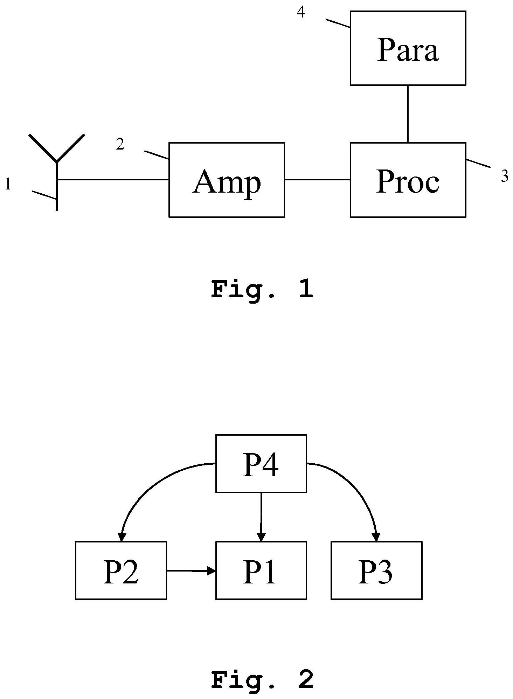

Die Hierarchieebenen werden bei einem Aktualisierungsprozess genutzt, um sämtliche Parameter in einer korrekten Reihenfolge zu aktualisieren. Würde durch eine Änderung eines Funktionszustands des Funkgeräts, z.B. eine Nutzereingabe, ein Parameter mit der Hierarchieebene n geändert, müssen zunächst alle davon abhängigen Parameter mit der Hierarchieebene n+1 aktualisiert werden. Anschließend werden die abhängigen Parameter mit Hierarchieebene n+2 aktualisiert. Es wird so lange weiterverfahren, bis sämtliche von dem geänderten Parameter abhängigen Parameter aktualisiert wurden. Die Aktualisierung erfolgt dabei in der korrekten Reihenfolge, um bei der Neuberechnung von Aktiv-Informationen und Wertbereich-Informationen abhängiger Parameter keine ungültigen Zwischenwerte zu erzeugen. Dies könnte passieren, wenn ein Parameter über mehr als einen Pfad indirekt von einem anderen Parameter abhängt. Würde nun z.B. erst komplett ein Pfad aktualisiert werden, so würde sich bei der Einbeziehung der Parameter des anderen Pfades in die Neuberechnung eventuell ein ungültiger Zwischenwert ergeben. Hierauf wird anhand der Fig. 2 näher eingegangen.

Außerdem können sich Ringabhängigkeiten ergeben, welche unter Umständen bei einer Parameteränderung zu einer nicht-abbrechenden Aktualisierung der abhängigen Parameter führen könnten. Wenn sich die Logik der Parameterabhängigkeit ändert, muss eventuell an mehreren Stellen Code angepasst werden. Wird eine davon vergessen, wird die Verwaltung der Parameter fehlerhaft sein. Wenn das Gerät nicht automatisch die notwendigen Parameter korrigiert, so ist es nach Änderung eines Parameters unter Umständen notwendig, eine manuelle Korrektur weiterer Parameter durchzuführen, bis sich das Gerät wieder in einer sinnvollen und konsistenten Gesamteinstellung befindet. Dies resultiert in einer unkomfortablen Bedienung.

Die Berechnung der Hierarchieebenen kann dabei zur Laufzeit des Funkgeräts während der Initialisierungsphase berechnet werden. Alternativ kann auch eine Berechnung während einer Kompilierungsphase im Rahmen der Herstellung des Funkgeräts erfolgen. Letzteres bietet einen Laufzeitvorteil.

Nachfolgend wird die Erfindung anhand der Zeichnung, an der vorteilhafte Ausführungsbeispiele der Erfindung dargestellt ist, beispielhaft beschrieben. In der Zeichnung zeigen:
- Fig. 1: ein erstes grobes Blockschaltbild eines Ausführungsbeispiels des erfindungsgemäßen Funkgeräts;
- Fig. 2: eine erste beispielhafte Parameterabhängigkeit;
- Fig. 3: eine zweite beispielhafte Parameterabhängigkeit, wie sie in einem zweiten Ausführungsbeispiel des erfindungsgemäßen Funkgeräts eingesetzt wird;
- Fig. 4: eine dritte beispielhafte Parameterabhängigkeit, wie sie in einem dritten Ausführungsbeispiel des erfindungsgemäßen Funkgeräts eingesetzt wird, und
- Fig. 5: ein Ausführungsbeispiel des erfindungsgemäßen Verfahrens.

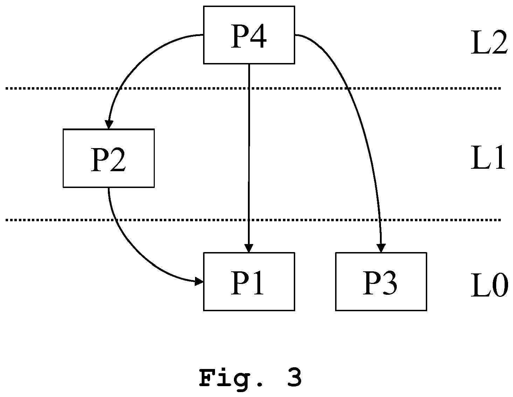

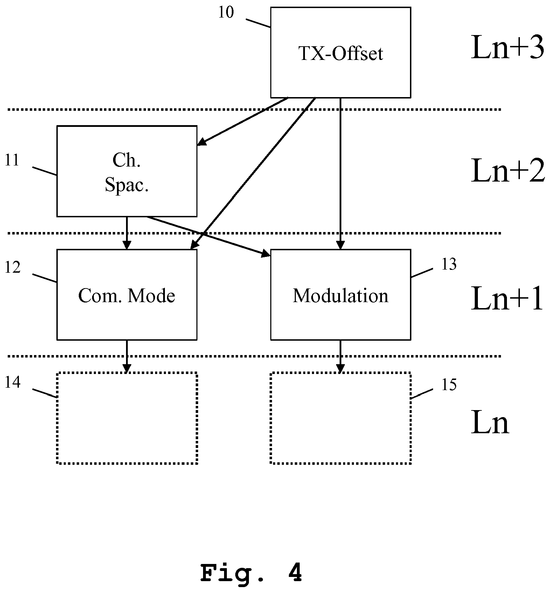

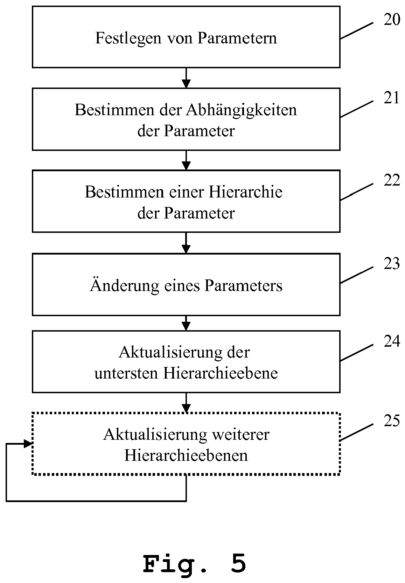

Zunächst werden anhand der Fig. 1 der Aufbau und die Funktionsweise des erfindungsgemäßen Funkgeräts erläutert. Mittels Fig. 2 und Fig. 3 wird das der Erfindung zugrundeliegende Problem dargestellt. Anhand der Fig. 3 und Fig. 4 wird anschließend weiter auf die Funktionsweise der erfindungsgemäßen Vorrichtung und des erfindungsgemäßen Verfahrens eingegangen. Abschließend wird anhand von Fig. 5 weiter das erfindungsgemäße Verfahren erklärt. Identische Elemente wurden in ähnlichen Abbildungen z.T. nicht wiederholt dargestellt und beschrieben.

In Fig. 1 wird ein Ausführungsbeispiel des erfindungsgemäßen Funkgeräts gezeigt. Eine Antenne 1 ist mit einem Verstärker 2 verbunden. Der Verstärker 2 ist mit einer Verarbeitungseinrichtung 3 verbunden. Die Verarbeitungseinrichtung 3 ist mit einer Parameterprüfeinrichtung 4 verbunden.

Die Verarbeitungseinrichtung 3 steuert die Funktion des Funkgeräts. Sie erzeugt auszusendende Daten, moduliert diese und wandelt sie in auszusendende analoge Signale. Diese werden dem Verstärker 2 zugeführt. Die Signale werden von dem Verstärker verstärkt und über die Antenne 1 ausgesendet. Ebenso empfängt die Antenne 1 Signale, welche von dem Verstärker 2 verstärkt und der Verarbeitungseinrichtung 3 zugeführt werden. Die Verarbeitungseinrichtung 3 digitalisiert die empfangenen Signale und wandelt sie in Daten um. Das erfindungsgemäße Funkgerät verfügt dabei über zahlreiche unterschiedliche Funktionszustände. Insbesondere können unterschiedliche Wellenformen (Übertragungsschemata an der Luftschnittstelle) und unterschiedliche Sende- und Empfangsfrequenzen eingesetzt werden. Um diese zahlreichen unterschiedlichen Funktionszustände zu charakterisieren, speichert die Verarbeitungseinrichtung 3 zahlreiche Parameter. Diese sind z.T. voneinander abhängig. Wird z.B. eine Frequenzmodulation eines auszusendenden Signals eingesetzt, ist ein Parameter, welcher die Anzahl von PSK-Zuständen spezifiziert, inaktiv. Wird dagegen eine PSK-Modulation eingesetzt, ist der Parameter aktiv. Der Wertebereich des Parameters kann in diesem Fall z.B. von dem eingesetzten Frequenzbereich abhängen.

Die Parameterprüfeinrichtung 4 kennt sämtliche dieser Parameter. Sie bestimmt die Abhängigkeiten dieser Parameter und erzeugt daraus eine Hierarchie der Parameter. Parameter, welche von keinen anderen Parametern abhängen, erhalten die niedrigste Hierarchiestufe. Parameter, welche lediglich von Parametern der niedrigsten Hierarchiestufe abhängen, erhalten eine um 1 erhöhte Hierarchiestufe. Jeder Parameter erhält dabei eine Hierarchiestufe, welche um 1 höher ist als die höchste Stufe der Parameter von denen er abhängt. Ausgehend von dieser ermittelten Hierarchie der Parameter bestimmt die Parameterprüfeinrichtung 4 im Falle der Änderung eines Parameters eine Aktualisierungsreihenfolge. Dabei wird von der niedrigsten Hierarchieebene zu der höchsten Hierarchieebene vorgegangen. Auf den genauen Ablauf einer solchen Aktualisierung wird anhand der Fig. 2 - 5 näher eingegangen.

Fig. 2 zeigt Abhängigkeiten mehrerer beispielhafter Parameter P1, P2, P3 und P4. Der Parameter P1 ist von keinem anderen Parameter abhängig. Der Parameter P2 ist lediglich von dem Parameter P1 abhängig. Der Parameter P4 ist von den Parametern P1, P2 und P3 abhängig. Auch der Parameter P3 ist von keinem weiteren Parameter abhängig. Besteht nun keine konkrete Vorschrift, in welcher Reihenfolge Parameter aktualisiert werden, könnte es z.B. zu folgendem Problem kommen: Parameter P1 wird durch eine Nutzereingabe geändert. Aufgrund der Abhängigkeit des Parameters P4 von dem Parameter P1 wird nun zunächst der Parameter P4 aktualisiert. Aufgrund der Abhängigkeit des Parameters P2 zu dem Parameter P1 wird anschließend der Parameter P2 aktualisiert. Der Parameter P4 ist jedoch nicht lediglich von dem Parameter P1 sondern auch von dem Parameter P2 abhängig. Somit wird nach der Aktualisierung des Parameters P2 erneut der Parameter P4 aktualisiert. Dabei kann sich ein erneuter Wechsel des Parameters P4 ergeben. Es entsteht somit während der Aktualisierung ein instabiler Zwischenzustand. Dies kann während des Betriebs des Funkgeräts z.B. zum kurzzeitigen Aussenden auf einer falschen Frequenz führen.

Um diesem Problem entgegenzuwirken, ordnet die Parameterprüfeinrichtung 4 aus Fig. 1 die Parameter in einer Hierarchie an. In Fig. 3 wird eine solche hierarchisch Anordnung der Parameter P1, P2, P3 und P4 aus Fig. 2 gezeigt. Die Parameter P1 und P3 sind von keinen weiteren Parametern abhängig. Sie werden somit auf der niedrigsten Hierarchieebene L0 angeordnet. Der Parameter P2 ist lediglich von dem Parameter P1 abhängig. Ihm wird somit eine um 1 erhöhte Hierarchieebene gegenüber dem Parameter P1 zugewiesen. Der Parameter P2 wird somit auf der Hierarchieebene L1 angeordnet. Der Parameter P4 ist abhängig von den Parametern P1, P2 und P3. Dem Parameter P4 wird eine um 1 höhere Hierarchieebene zugeordnet, als die höchste Hierarchieebene der Parameter, von welchen er abhängt. Der Parameter P2 verfügt über die höchste Hierarchieebene unter den Parameter, von welchen der Parameter P4 abhängt. Da der Parameter P2 über die Hierarchieebene L1 verfügt, wird dem Parameter P4 die Hierarchieebene L2 zugeordnet.

Wird nun, wie anhand von Fig. 2 beschrieben, der Parameter P1 z.B. durch eine Nutzereingabe verändert, wird nun nicht zunächst der Parameter P4 aktualisiert, obwohl dieser direkt abhängig ist von dem Parameter P1, sondern es wird nach der Hierarchieebene vorgegangen. Es wird somit zunächst die gesamte Hierarchieebene, welche um 1 höher liegt als die Hierarchieebene des zunächst veränderten Parameters P1 abgearbeitet. D.h. in diesem einfachen Beispiel wird lediglich der Parameter P2 aktualisiert. Anschließend wird die nächsthöhere Hierarchieebene L2 verarbeitet. Der Parameter P4 hängt von den Parametern P1, P2 und P3 ab. Die Änderung des Parameters P1 und die Änderung des Parameters P2 werden somit bereits berücksichtigt, um den Parameter P4 zu ändern. Bei diesem Vorgehen kommt es zu keinen instabilen Zwischenzuständen. Durch eine Anordnung der Parameter in Hierarchieebenen L0, L1 und L2 wird weiterhin ein Auftreten von Ringschlüssen erkannt. In diesem Fall kann keine korrekte Parameteraktualisierung stattfinden. Der Nutzer bzw. Entwickler des Funkgeräts wird jedoch auf den Ringschluss aufmerksam gemacht. Es ergibt sich durch einen unentdeckten Ringschluss keine inkorrekte Funktion des Funkgeräts.

Neben Aktiv-Informationen und Wertebereich-Informationen kann es für jeden Parameter weitere Attribute wie z.B. Informationen zu seiner Sichtbarkeit und Gewichtungsinformationen geben. Bei Parameteränderungen, sei es direkt durch Setzen eines Parameters, oder durch eine automatische Aktualisierung eines abhängigen Parameters, können weitere Software-Komponenten und/oder Hardware-Komponenten, die an diesen Parametern interessiert sind, wie z.B. eine grafische Benutzerschnittstelle über die Änderung des Parameters informiert werden.

In Fig. 4 wird in einem praktischen Beispiel eine Parameter-Abhängigkeit aus einem softwarebasierten Funkgerät gezeigt. Ein Parameter 13, welcher die Modulationsart kennzeichnet, kann die Werte "AM" für Amplitudenmodulation und "FM" für Frequenzmodulation annehmen. Ein Parameter 11 spezifiziert den Kanalabstand. Er kann die Werte "25kHz", "12,5kHz" und "8,33kHz" annehmen. Ein Parameter 10 kennzeichnet einen Versatz der Sendefrequenz. Er kann die Werte "-7,5kHz", "-5kHz", "-2,5kHz", "0kHz", "2,5kHz", "5KHz" und "7,5"kHz annehmen. Ein weiterer Parameter 12 kennzeichnet den Kommunikationsmodus. Er kann die Werte "unverschlüsselter Sprachbetrieb", "verschlüsselter Sprachbetrieb" oder "Datenbetrieb" annehmen.

Bei sämtlichen Parametern 10, 11, 12 und 13 sind jedoch die möglichen Werte durch Abhängigkeiten eingeschränkt. So kann der Parameter 11 den Wert "25 kHz" immer annehmen. Den Wert "12,5kHz" kann er jedoch nur annehmen, wenn der Parameter 12 nicht auf "verschlüsselter Sprachbetrieb" steht. Er kann an den Wert "8,33kHz", nur anzunehmen, wenn der Parameter 12 den Wert "unverschlüsselter Sprachbetrieb" annimmt und die Modulation d.h. der Parameter 13, auf "AM" steht.

Der Parameter 10 besitzt eine Aktiv-Regel, da er nur Sinn macht, wenn der Kommunikationsmodus, d.h. Parameter 12 auf "unverschlüsselter Sprachbetrieb" steht und die Modulation auf "AM" steht und der Parameter 11, der Kanalabstand, auf "25kHz" steht. Ist diese Bedingung nicht erfüllt, verliert der Parameter 10 seinen Aktivstatus und wird bedeutungslos.

Aufgrund der geschilderten Abhängigkeiten, ordnet die Parameterprüfeinrichtung 4 aus Fig. 1 die Parameter hierarchisch an. Die Parameter 12, 13 sind lediglich von nicht weiter thematisierten Parametern 14, 15 abhängig, welche auf der Hierarchieebene Ln angeordnet sind. Die Parameter 12, 13 werden somit auf der Hierarchieebene Ln+1 angeordnet. Der Parameter 11 ist sowohl von dem Parameter 12 wie auch von dem Parameter 13 abhängig. Er wird somit eine Hierarchieebene höher, Ln+2, als diese Parameter 12, 13 angeordnet, da die Parameter beide über die Hierarchieebene Ln+1 verfügen. Der Parameter 10 ist sowohl von dem Parameter 11, wie auch den Parametern 12 und 13 abhängig. Er wird somit auf der Hierarchieebene Ln+3 angeordnet, da der Parameter 11 bereits auf der Hierarchieebene Ln+2 angeordnet ist.

Im folgenden Fall wird der Parameter 11 korrigiert. Steht der Parameter 12 auf "unverschlüsselter Sprachbetrieb", der Parameter 13 auf "AM", der Parameter 11 auf den dann erlaubten "8,33 kHz" und wird nun der Parameter 12 durch den Benutzer auf "Datenbetrieb" geändert, so verlässt der Parameter 11 den gültigen Wertebereich, da "8,33kHZ" nicht länger erlaubt sind. Der Wert des Parameters 11 wird daher automatisch auf den nächsten zulässigen Wert, "25kHz" korrigiert.

Soll vom Benutzer ein Wert an einem Parameter eingestellt werden, der nicht innerhalb des erlaubten Wertebereichs ist, so wird die Einstellung abgelehnt.

Anhand von Fig. 5 wird abschließend ein Ausführungsbeispiel des erfindungsgemäßen Verfahrens gezeigt. In einem ersten Schritt 20 werden zunächst Parameter und gültige Werte dieser Parameter festgelegt. In einem zweiten Schritt 21 werden Abhängigkeiten dieser Parameter untereinander bestimmt. D.h. es werden zu den einzelnen Parametern Regeln ermittelt, welche z.B. die Wertebereich-Information oder die Aktiv-Information beeinflussen. In einem dritten Schritt 22 wird anhand dieser Abhängigkeiten der Parameter eine Hierarchie der Parameter bestimmt. Dabei wird wie anhand von Fig. 2 - 4 gezeigt vorgegangen. Die Schritte 20 - 22 werden zur Entwicklungszeit des Funkgeräts durchgeführt.

Die weiteren Schritte werden durchgeführt, sobald ein Parameter geändert werden soll. In einem vierten Schritt 23 wird ein einzelner Parameter z.B. durch eine Nutzereingabe oder eine Veränderung äußerer Umstände geändert. In einem fünften Schritt 24 wird nun ausgehend von dem geänderten Parameter die nächsthöher liegende Hierarchieebene aktualisiert. Befindet sich der geänderte Parameter aus Schritt 23 auf der Hierarchieebene L0, wird im Schritt 24 die Hierarchieebene L1 aktualisiert, d.h. sämtlicher Parameter, welche sich in dieser Hierarchieebene befinden und von dem geänderten Parameter abhängig sind, werden nun aktualisiert. In einem optionalen sechsten Schritt 25 werden weitere Hierarchieebenen in dieser Form aktualisiert. D.h. es werden zunächst sämtliche Parameter der nächsthöheren Hierarchieebene L2 aktualisiert, bevor in einem weiteren Schritt sämtliche Parameter der Hierarchieebene L3 aktualisiert werden. Der optionale Schritt 25 wird dabei solange wiederholt, bis sämtliche Parameter, welche von dem abhängigen Parameter aus Schritt 23 abhängen, auf sämtlichen Hierarchieebenen aktualisiert wurden.

Die Erfindung ist nicht auf das dargestellte Ausführungsbeispiel beschränkt. Alle vorstehend beschriebenen Merkmale oder in den Figuren gezeigten Merkmale sind im Rahmen der Erfindung beliebig vorteilhalft miteinander kombinierbar.

## Patentansprüche

1. Funkgerät mit einer Verarbeitungseinrichtung (3) und einer Parameterprüfeinrichtung (4),
wobei die Verarbeitungseinrichtung (3) die Funktion des Funkgeräts mittels Parametern (P1, P2, P3, P4, 10, 11, 12, 13, 14, 15) steuert,
**dadurch gekennzeichnet,**
**dass** die Parameterprüfeinrichtung (4) Abhängigkeiten der Parameter (P1, P2, P3, P4, 10, 11, 12, 13, 14, 15) überwacht,
**dass** die Parameterprüfeinrichtung (4) die Parameter (P1, P2, P3, P4, 10, 11, 12, 13, 14, 15) in einer Hierarchie ordnet,
**dass** die Parameterprüfeinrichtung (4) die Parameter (P1, P2, P3, P4, 10, 11, 12, 13, 14, 15) in einer Reihenfolge nach ihrer Hierarchie aktualisiert,
**dass** die Parameterprüfeinrichtung (4) die Parameter (P1, P2, P3, P4, 10, 11, 12, 13, 14, 15) nach ihren Abhängigkeiten in der Hierarchie ordnet,
**dass** die Parameterprüfeinrichtung (4) jedem Parameter (P1, P2, P3, P4, 10, 11, 12, 13, 14, 15) eine Hierarchieebene (L0, L1, L2, Ln, Ln+1, Ln+2, Ln+3) zuweist, und/oder
**dass** die Parameterprüfeinrichtung (4) die Hierarchieebene (L0, L1, L2, Ln, Ln+1, Ln+2, Ln+3) eines Parameters (P1, P2, P3, P4, 10, 11, 12, 13, 14, 15) nach Abhängigkeiten dieses Parameters von weiteren Parametern (P1, P2, P3, P4, 10, 11, 12, 13, 14, 15) festlegt, und
**dass** die Parameterprüfeinrichtung (4) einem Parameter (P1, P2, P3, P4, 10, 11, 12, 13, 14, 15), welcher von keinem weiteren Parameter (P1, P2, P3, P4, 10, 11, 12, 13, 14, 15) abhängig ist, eine niedrigste Hierarchieebene (L0, L1, L2, Ln, Ln+1, Ln+2, Ln+3) zuweist, und/oder
**dass** die Parameterprüfeinrichtung (4) einem Parameter (P1, P2, P3, P4, 10, 11, 12, 13, 14, 15), welcher von zumindest einem weiteren Parameter (P1, P2, P3, P4, 10, 11, 12, 13, 14, 15) abhängig ist, eine Hierarchieebene (L0, L1, L2, Ln, Ln+1, Ln+2, Ln+3) zuweist, welche zumindest um eine Stufe höher ist, als die höchste Hierarchieebene (L0, L1, L2, Ln, Ln+1, Ln+2, Ln+3) der Parameter (P1, P2, P3, P4, 10, 11, 12, 13, 14, 15), von welcher er abhängig ist.

2. Funkgerät nach Anspruch 1,
**dadurch gekennzeichnet,**
**dass** die Parameterprüfeinrichtung (4) bei einer Änderung eines Werts eines Parameters (P1, P2, P3, P4, 10, 11, 12, 13, 14, 15) eine Aktualisierungsreihenfolge weiterer Parameter (P1, P2, P3, P4, 10, 11, 12, 13, 14, 15) basierend auf der ermittelten Hierarchie ermittelt.

3. Funkgerät nach Anspruch 2,
**dadurch gekennzeichnet,**
**dass** zunächst sämtliche Parameter (P1, P2, P3, P4, 10, 11, 12, 13, 14, 15) einer Hierarchieebene (L0, L1, L2, Ln, Ln+1, Ln+2, Ln+3) direkt über der Hierarchieebene des geänderten Parameters (P1, P2, P3, P4, 10, 11, 12, 13, 14, 15) aktualisiert werden.

4. Funkgerät nach Anspruch 2 oder 3,
**dadurch gekennzeichnet,**
**dass** sämtliche Parameter (P1, P2, P3, P4, 10, 11, 12, 13, 14, 15) einer Hierarchieebene (L0, L1, L2, Ln, Ln+1, Ln+2, Ln+3) nacheinander und/oder gleichzeitig aktualisiert werden, und/oder
**dass** beginnend bei einer Hierarchieebene (L0, L1, L2, Ln, Ln+1, Ln+2, Ln+3) direkt über der Hierarchieebene des zu geänderten Parameters (P1, P2, P3, P4, 10, 11, 12, 13, 14, 15) sämtliche Hierarchieebenen (L0, L1, L2, Ln, Ln+1, Ln+2, Ln+3) von unten nach oben aktualisiert werden.

5. Funkgerät nach einem der Ansprüche 1 bis 4,
**dadurch gekennzeichnet,**
**dass** die Parameterprüfeinrichtung (4) bei einer Änderung oder einer Aktualisierung eines Parameters (P1, P2, P3, P4, 10, 11, 12, 13, 14, 15) auf einen ungültigen oder inaktiven Wert automatisch einen gültigen und aktiven Wert einsetzt.

6. Verfahren zum Betrieb eines Funkgeräts,
wobei die Funktion des Funkgeräts mittels Parametern (P1, P2, P3, P4, 10, 11, 12, 13, 14, 15) gesteuert wird,
**dadurch gekennzeichnet,**
**dass** Abhängigkeiten der Parameter (P1, P2, P3, P4, 10, 11, 12, 13, 14, 15) überwacht werden,
**dass** die Parameter (P1, P2, P3, P4, 10, 11, 12, 13, 14, 15) in einer Hierarchie geordnet werden,
**dass** die Parameter (P1, P2, P3, P4, 10, 11, 12, 13, 14, 15) in einer Reihenfolge nach ihrer Hierarchie aktualisiert werden,
**dass** die Parameter (P1, P2, P3, P4, 10, 11, 12, 13, 14, 15) nach ihren Abhängigkeiten in der Hierarchie geordnet werden,
**dass** jedem Parameter (P1, P2, P3, P4, 10, 11, 12, 13, 14, 15) eine Hierarchieebene (L0, L1, L2, Ln, Ln+1, Ln+2, Ln+3) zugewiesen wird, und/oder
**dass** die Hierarchieebene (L0, L1, L2, Ln, Ln+1, Ln+2, Ln+3) eines Parameters (P1, P2, P3, P4, 10, 11, 12, 13, 14, 15) nach Abhängigkeiten dieses Parameters (P1, P2, P3, P4, 10, 11, 12, 13, 14, 15) von weiteren Parametern (P1, P2, P3, P4, 10, 11, 12, 13, 14, 15) festlegt wird, und
**dass** einem Parameter (P1, P2, P3, P4, 10, 11, 12, 13, 14, 15), welcher von keinem weiteren Parameter (P1, P2, P3, P4, 10, 11, 12, 13, 14, 15) abhängig ist, eine niedrigste Hierarchieebene (L0, L1, L2, Ln, Ln+1, Ln+2, Ln+3) zugewiesen wird, und/oder
**dass** einem Parameter (P1, P2, P3, P4, 10, 11, 12, 13, 14, 15), welcher von zumindest einem weiteren Parameter (P1, P2, P3, P4, 10, 11, 12, 13, 14, 15) abhängig ist, eine Hierarchieebene (L0, L1, L2, Ln, Ln+1, Ln+2, Ln+3) zugewiesen wird, welche zumindest um eine Stufe höher ist, als die höchste Hierarchieebene (L0, L1, L2, Ln, Ln+1, Ln+2, Ln+3) der Parameter (P1, P2, P3, P4, 10, 11, 12, 13, 14, 15), von welcher er abhängig ist.

7. Verfahren nach Anspruch 6,
**dadurch gekennzeichnet,**
**dass** bei einer Änderung eines Werts eines Parameters (P1, P2, P3, P4, 10, 11, 12, 13, 14, 15) eine Aktualisierungsreihenfolge weiterer Parameter (P1, P2, P3, P4, 10, 11, 12, 13, 14, 15) basierend auf der ermittelten Hierarchie ermittelt wird.

8. Verfahren nach Anspruch 7,
**dadurch gekennzeichnet,**
**dass** zunächst sämtliche Parameter (P1, P2, P3, P4, 10, 11, 12, 13, 14, 15) einer Hierarchieebene (L0, L1, L2, Ln, Ln+1, Ln+2, Ln+3) direkt über der Hierarchieebene (L0, L1, L2, Ln, Ln+1, Ln+2, Ln+3) des geänderten Parameters (P1, P2, P3, P4, 10, 11, 12, 13, 14, 15) aktualisiert werden.

9. Verfahren nach Anspruch 7 oder 8,
**dadurch gekennzeichnet,**
**dass** sämtliche Parameter (P1, P2, P3, P4, 10, 11, 12, 13, 14, 15) einer Hierarchieebene (L0, L1, L2, Ln, Ln+1, Ln+2, Ln+3) nacheinander und/oder gleichzeitig aktualisiert werden, und/oder
**dass** beginnend bei einer Hierarchieebene (L0, L1, L2, Ln, Ln+1, Ln+2, Ln+3) direkt über der Hierarchieebene (L0, L1, L2, Ln, Ln+1, Ln+2, Ln+3) des zu geänderten Parameters (P1, P2, P3, P4, 10, 11, 12, 13, 14, 15) sämtliche Hierarchieebenen (L0, L1, L2, Ln, Ln+1, Ln+2, Ln+3) von unten nach oben aktualisiert werden.

10. Verfahren nach einem der Ansprüche 6 bis 9,
**dadurch gekennzeichnet,**
**dass** bei einer Änderung oder einer Aktualisierung eines Parameters (P1, P2, P3, P4, 10, 11, 12, 13, 14, 15) auf einen ungültigen oder inaktiven Wert automatisch ein gültiger und aktiver Wert eingesetzt wird.

11. Computerprogramm mit Programmcode-Mitteln, um alle Schritte gemäß einem der Ansprüche 6 bis 10 durchführen zu können, wenn das Programm auf einem Computer oder einem digitalen Signalprozessor ausgeführt wird.

12. Computerprogramm-Produkt mit auf einem maschinenlesbaren Träger gespeicherten Programmcode-Mitteln, um alle Schritte gemäß einem der Ansprüche 6 bis 10 durchführen zu können, wenn das Programm auf einem Computer oder einem digitalen Signalprozessor ausgeführt wird.

## Claims

1. Radio device with a processing means (3) and a parameter checking means (4),
wherein the processing means (3) controls the operation of the radio device by means of parameters (P1, P2, P3, P4, 10, 11, 12, 13, 14, 15),
**characterised in that**
the parameter checking means (4) monitors dependencies of the parameters (P1, P2, P3, P4, 10, 11, 12, 13, 14, 15), **in that** the parameter checking means (4) arranges the parameters (P1, P2, P3, P4, 10, 11, 12, 13, 14, 15) in a hierarchy,
**in that** the parameter checking means (4) updates the parameters (P1, P2, P3, P4, 10, 11, 12, 13, 14, 15) in an order according to their hierarchy,
**in that** the parameter checking means (4) arranges the parameters (P1, P2, P3, P4, 10, 11, 12, 13, 14, 15) according to their dependencies in the hierarchy,
**in that** the parameter checking means (4) assigns a hierarchy level (L0, L1, L2, Ln, Ln+1, Ln+2, Ln+3) to each parameter (P1, P2, P3, P4, 10, 11, 12, 13, 14, 15), and/or
**in that** the parameter checking means (4) defines the hierarchy level (L0, L1, L2, Ln, Ln+1, Ln+2, Ln+3) of a parameter (P1, P2, P3, P4, 10, 11, 12, 13, 14, 15) according to dependencies of this parameter on further parameters (P1, P2, P3, P4, 10, 11, 12, 13, 14, 15), and **in that** the parameter checking means (4) assigns a lowest hierarchy level (L0, L1, L2, Ln, Ln+1, Ln+2, Ln+3) to a parameter (P1, P2, P3, P4, 10, 11, 12, 13, 14, 15) which is not dependent on any further parameter (P1, P2, P3, P4, 10, 11, 12, 13, 14, 15), and/or
**in that** the parameter checking means (4) assigns to a parameter (P1, P2, P3, P4, 10, 11, 12, 13, 14, 15) which is dependent on at least one further parameter (P1, P2, P3, P4, 10, 11, 12, 13, 14, 15) a hierarchy level (L0, L1, L2, Ln, Ln+1, Ln+2, Ln+3) which is at least one level higher than the highest hierarchy level (L0, L1, L2, Ln, Ln+1, Ln+2, Ln+3) of the parameters (P1, P2, P3, P4, 10, 11, 12, 13, 14, 15) on which it is dependent.

2. Radio device according to claim 1,
**characterised in that**
if a value of a parameter (P1, P2, P3, P4, 10, 11, 12, 13, 14, 15) changes, the parameter checking means (4) determines an updating order for further parameters (P1, P2, P3, P4, 10, 11, 12, 13, 14, 15) based on the hierarchy that is determined.

3. Radio device according to claim 2,
**characterised in that**
initially all the parameters (P1, P2, P3, P4, 10, 11, 12, 13, 14, 15) of a hierarchy level (L0, L1, L2, Ln, Ln+1, Ln+2, Ln+3) are updated directly above the hierarchy level of the changed parameter (P1, P2, P3, P4, 10, 11, 12, 13, 14, 15).

4. Radio device according to one of claims 2 or 3,
**characterised in that**
all the parameters (P1, P2, P3, P4, 10, 11, 12, 13, 14, 15) of a hierarchy level (L0, L1, L2, Ln, Ln+1, Ln+2, Ln+3) are updated successively and/or simultaneously, and/or
**in that** starting with a hierarchy level (L0, L1, L2, Ln, Ln+1, Ln+2, Ln+3) directly above the hierarchy level of the changed parameter (P1, P2, P3, P4, 10, 11, 12, 13, 14, 15) all the hierarchy levels (L0, L1, L2, Ln, Ln+1, Ln+2, Ln+3) are updated from the bottom upwards.

5. Radio device according to one of claims 1 to 4,
**characterised in that**
if a parameter (P1, P2, P3, P4, 10, 11, 12, 13, 14, 15) is changed or updated to an invalid or inactive value, the parameter checking means (4) automatically inserts a valid and active value.

6. Method for operation of a radio device,
wherein the operation of the radio device is controlled by means of parameters (P1, P2, P3, P4, 10, 11, 12, 13, 14, 15),
**characterised in that**
dependencies of the parameters (P1, P2, P3, P4, 10, 11, 12, 13, 14, 15) are monitored,
**in that** the parameters (P1, P2, P3, P4, 10, 11, 12, 13, 14, 15) are arranged in a hierarchy,
**in that** the parameters (P1, P2, P3, P4, 10, 11, 12, 13, 14, 15) are updated in an order according to their hierarchy,
**in that** the parameters (P1, P2, P3, P4, 10, 11, 12, 13, 14, 15) are arranged according to their dependencies in the hierarchy,
**in that** each parameter (P1, P2, P3, P4, 10, 11, 12, 13, 14, 15) is assigned a hierarchy level (L0, L1, L2, Ln, Ln+1, Ln+2, Ln+3), and/or
**in that** the hierarchy level (L0, L1, L2, Ln, Ln+1, Ln+2, Ln+3) of a parameter (P1, P2, P3, P4, 10, 11, 12, 13, 14, 15) is determined according to dependencies of this parameter (P1, P2, P3, P4, 10, 11, 12, 13, 14, 15) on further parameters (P1, P2, P3, P4, 10, 11, 12, 13, 14, 15), and
**in that** a parameter (P1, P2, P3, P4, 10, 11, 12, 13, 14, 15) which is not dependent on any further parameter (P1, P2, P3, P4, 10, 11, 12, 13, 14, 15) is assigned a lowest hierarchy level (L0, L1, L2, Ln, Ln+1, Ln+2, Ln+3), and/or
**in that** a parameter (P1, P2, P3, P4, 10, 11, 12, 13, 14, 15) which is dependent on at least one further parameter (P1, P2, P3, P4, 10, 11, 12, 13, 14, 15) is assigned a hierarchy level (L0, L1, L2, Ln, Ln+1, Ln+2, Ln+3) which is at least one level higher than the highest hierarchy level (L0, L1, L2, Ln, Ln+1, Ln+2, Ln+3) of the parameters (P1, P2, P3, P4, 10, 11, 12, 13, 14, 15) on which it is dependent.

7. Method according to claim 6,
**characterised in that**
if a value of a parameter (P1, P2, P3, P4, 10, 11, 12, 13, 14, 15) is changed, an updating order for further parameters (P1, P2, P3, P4, 10, 11, 12, 13, 14, 15) is determined based on the hierarchy that is determined.

8. Method according to claim 7,
**characterised in that**
initially all the parameters (P1, P2, P3, P4, 10, 11, 12, 13, 14, 15) of a hierarchy level (L0, L1, L2, Ln, Ln+1, Ln+2, Ln+3) are updated directly above the hierarchy level (L0, L1, L2, Ln, Ln+1, Ln+2, Ln+3) of the changed parameter (P1, P2, P3, P4, 10, 11, 12, 13, 14, 15).

9. Method according to claim 7 or 8,
**characterised in that**
all the parameters (P1, P2, P3, P4, 10, 11, 12, 13, 14, 15) of a hierarchy level (L0, L1, L2, Ln, Ln+1, Ln+2, Ln+3) are updated successively and/or simultaneously, and/or
**in that** starting with a hierarchy level (L0, L1, L2, Ln, Ln+1, Ln+2, Ln+3) directly above the hierarchy level (L0, L1, L2, Ln, Ln+1, Ln+2, Ln+3) of the changed parameter (P1, P2, P3, P4, 10, 11, 12, 13, 14, 15) all the hierarchy levels (L0, L1, L2, Ln, Ln+1, Ln+2, Ln+3) are updated from the bottom upwards.

10. Method according to one of claims 6 to 9,
**characterised in that**
if a parameter (P1, P2, P3, P4, 10, 11, 12, 13, 14, 15) is changed or updated to an invalid or inactive value, a valid and active value is inserted automatically.

11. Computer programme with programme code means in order to be able to carry out all the steps according to one of claims 6 to 10 when the programme is implemented on a computer or a digital signal processor.

12. Computer programme product with programme code means stored on a machine-readable data storage medium in order to be able to carry out all the steps according to one of claims 6 to 10 when the programme is implemented on a computer or a digital signal processor.

## Revendications

1. Appareil radio avec un dispositif de traitement (3) et un dispositif de contrôle de paramètres (4),
dans lequel le dispositif de traitement (3) commande le fonctionnement de l'appareil radio au moyen de paramètres (P1, P2, P3, P4, 10, 11, 12, 13, 14, 15),
**caractérisé**
**en ce que** le dispositif de contrôle de paramètres (4) surveille des dépendances des paramètres (P1, P2, P3, P4, 10, 11, 12, 13, 14, 15),
**en ce que** le dispositif de contrôle de paramètres (4) ordonne les paramètres (P1, P2, P3, P4, 10, 11, 12, 13, 14, 15) suivant une hiérarchie,
**en ce que** le dispositif de contrôle de paramètres (4) actualise les paramètres (P1, P2, P3, P4, 10, 11, 12, 13, 14, 15) dans un ordre suivant leur hiérarchie,
**en ce que** le dispositif de contrôle de paramètres (4) ordonne les paramètres (P1, P2, P3, P4, 10, 11, 12, 13, 14, 15) suivant leurs dépendances dans la hiérarchie,
**en ce que** le dispositif de contrôle de paramètres (4) attribue à chaque paramètre (P1, P2, P3, P4, 10, 11, 12, 13, 14, 15) un niveau hiérarchique (L0, L1, L2, Ln, Ln+1, Ln+2, Ln+3), et/ou
**en ce que** le dispositif de contrôle de paramètres (4) définit le niveau hiérarchique (L0, L1, L2, Ln, Ln+1, Ln+2, Ln+3) d'un paramètre (P1, P2, P3, P4, 10, 11, 12, 13, 14, 15) suivant les dépendances de ce paramètre par rapport à d'autres paramètres (P1, P2, P3, P4, 10, 11, 12, 13, 14, 15), et
**en ce que** le dispositif de contrôle de paramètres (4) attribue le niveau hiérarchique le plus bas (L0, L1, L2, Ln, Ln+1, Ln+2, Ln+3) à un paramètre (P1, P2, P3, P4, 10, 11, 12, 13, 14, 15) qui n'est dépendant d'aucun autre paramètre (P1, P2, P3, P4, 10, 11, 12, 13, 14, 15), et/ou
**en ce que** le dispositif de contrôle de paramètres (4) attribue à un paramètre (P1, P2, P3, P4, 10, 11, 12, 13, 14, 15) qui est dépendant d'au moins un autre paramètre (P1, P2, P3, P4, 10, 11, 12, 13, 14, 15) un niveau hiérarchique (L0, L1, L2, Ln, Ln+1, Ln+2, Ln+3) supérieur d'au moins un degré au niveau hiérarchique (L0, L1, L2, Ln, Ln+1, Ln+2, Ln+3) le plus élevé des paramètres (P1, P2, P3, P4, 10, 11, 12, 13, 14, 15) dont il est dépendant.

2. Appareil radio selon la revendication 1,
**caractérisé**
**en ce qu'**en cas de modification d'une valeur d'un paramètre (P1, P2, P3, P4, 10, 11, 12, 13, 14, 15), le dispositif de contrôle de paramètres (4) détermine un ordre d'actualisation d'autres paramètres (P1, P2, P3, P4, 10, 11, 12, 13, 14, 15) sur la base de la hiérarchie déterminée.

3. Appareil radio selon la revendication 2,
**caractérisé**
**en ce que** tous les paramètres (P1, P2, P3, P4, 10, 11, 12, 13, 14, 15) d'un niveau hiérarchique (L0, L1, L2, Ln, Ln+1, Ln+2, Ln+3) directement au-dessus du niveau hiérarchique du paramètre modifié (P1, P2, P3, P4, 10, 11, 12, 13, 14, 15) sont actualisés en premier lieu.

4. Appareil radio selon la revendication 2 ou 3,
**caractérisé**
**en ce que** tous les paramètres (P1, P2, P3, P4, 10, 11, 12, 13, 14, 15) d'un niveau hiérarchique (L0, L1, L2, Ln, Ln+1, Ln+2, Ln+3) sont actualisés successivement et/ou simultanément, et/ou
**en ce que** tous les niveaux hiérarchiques (L0, L1, L2, Ln, Ln+1, Ln+2, Ln+3) sont actualisés du bas vers le haut en partant d'un niveau hiérarchique (L0, L1, L2, Ln, Ln+1, Ln+2, Ln+3) directement au-dessus du niveau hiérarchique du paramètre (P1, P2, P3, P4, 10, 11, 12, 13, 14, 15) à modifier.

5. Appareil radio selon l'une des revendications 1 à 4,
**caractérisé**
**en ce qu'**en cas de modification ou d'actualisation d'un paramètre (P1, P2, P3, P4, 10, 11, 12, 13, 14, 15), le dispositif de contrôle de paramètres (4) substitue automatiquement une valeur valide et active à une valeur invalide ou inactive.

6. Procédé de fonctionnement d'un appareil radio,
dans lequel le fonctionnement de l'appareil radio est commandé au moyen de paramètres (P1, P2, P3, P4, 10, 11, 12, 13, 14, 15),
**caractérisé**
**en ce que** des dépendances des paramètres (P1, P2, P3, P4, 10, 11, 12, 13, 14, 15) sont surveillées,
**en ce que** les paramètres (P1, P2, P3, P4, 10, 11, 12, 13, 14, 15) sont ordonnés suivant une hiérarchie,
**en ce que** les paramètres (P1, P2, P3, P4, 10, 11, 12, 13, 14, 15) sont actualisés dans un ordre suivant leur hiérarchie,
**en ce que** les paramètres (P1, P2, P3, P4, 10, 11, 12, 13, 14, 15) sont ordonnés suivant leurs dépendances dans la hiérarchie,
**en ce qu'**un niveau hiérarchique (L0, L1, L2, Ln, Ln+1, Ln+2, Ln+3) est attribué à chaque paramètre (P1, P2, P3, P4, 10, 11, 12, 13, 14, 15), et/ou
**en ce que** le niveau hiérarchique (L0, L1, L2, Ln, Ln+1, Ln+2, Ln+3) d'un paramètre (P1, P2, P3, P4, 10, 11, 12, 13, 14, 15) est défini suivant les dépendances dudit paramètre (P1, P2, P3, P4, 10, 11, 12, 13, 14, 15) par rapport à d'autres paramètres (P1, P2, P3, P4, 10, 11, 12, 13, 14, 15), et
**en ce que** le niveau hiérarchique le plus bas (L0, L1, L2, Ln, Ln+1, Ln+2, Ln+3) est attribué à un paramètre (P1, P2, P3, P4, 10, 11, 12, 13, 14, 15) qui n'est dépendant d'aucun autre paramètre (P1, P2, P3, P4, 10, 11, 12, 13, 14, 15), et/ou
**en ce qu'**à un paramètre (P1, P2, P3, P4, 10, 11, 12, 13, 14, 15) qui est dépendant d'au moins un autre paramètre (P1, P2, P3, P4, 10, 11, 12, 13, 14, 15), il est attribué un niveau hiérarchique (L0, L1, L2, Ln, Ln+1, Ln+2, Ln+3) supérieur d'au moins un degré au niveau hiérarchique (L0, L1, L2, Ln, Ln+1, Ln+2, Ln+3) le plus élevé des paramètres (P1, P2, P3, P4, 10, 11, 12, 13, 14, 15) dont il est dépendant.

7. Procédé selon la revendication 6,
**caractérisé**
**en ce qu'**en cas de modification d'une valeur d'un paramètre (P1, P2, P3, P4, 10, 11, 12, 13, 14, 15), un ordre d'actualisation d'autres paramètres (P1, P2, P3, P4, 10, 11, 12, 13, 14, 15) est déterminé sur la base de la hiérarchie déterminée.

8. Procédé selon la revendication 7,
**caractérisé**
**en ce que** tous les paramètres (P1, P2, P3, P4, 10, 11, 12, 13, 14, 15) d'un niveau hiérarchique (L0, L1, L2, Ln, Ln+1, Ln+2, Ln+3) directement au-dessus du niveau hiérarchique du paramètre modifié (P1, P2, P3, P4, 10, 11, 12, 13, 14, 15) sont actualisés en premier lieu.

9. Procédé selon la revendication 7 ou 8,
**caractérisé**
**en ce que** tous les paramètres (P1, P2, P3, P4, 10, 11, 12, 13, 14, 15) d'un niveau hiérarchique (L0, L1, L2, Ln, Ln+1, Ln+2, Ln+3) sont actualisés successivement et/ou simultanément, et/ou
**en ce que** tous les niveaux hiérarchiques (L0, L1, L2, Ln, Ln+1, Ln+2, Ln+3) sont actualisés du bas vers le haut en partant d'un niveau hiérarchique (L0, L1, L2, Ln, Ln+1, Ln+2, Ln+3) directement au-dessus du niveau hiérarchique du paramètre (P1, P2, P3, P4, 10, 11, 12, 13, 14, 15) à modifier.

10. Procédé selon l'une des revendications 6 à 9,
**caractérisé**
**en ce qu'**en cas de modification ou d'actualisation d'un paramètre (P1, P2, P3, P4, 10, 11, 12, 13, 14, 15), une valeur valide et active est automatiquement substituée à une valeur invalide ou inactive.

11. Programme informatique avec des moyens de code-programme pour l'exécution de toutes les étapes selon l'une des revendications 6 à 10, quand le programme est exécuté sur un ordinateur ou un processeur numérique de signaux.

12. Produit de programme informatique avec des moyens de code-programme mémorisés sur un support lisible par machine pour l'exécution de toutes les étapes selon l'une des revendications 6 à 10, quand le programme est exécuté sur un ordinateur ou un processeur numérique de signaux.
